# EUROPÄISCHE PATENTSCHRIFT

(11) **EP 2 807 351 B1**
(45) Veröffentlichungstag und Bekanntmachung des Hinweises auf die Patenterteilung: **17.05.2017**
(21) Anmeldenummer: 13700067.5
(22) Anmeldetag: 04.01.2013
(51) Int. Cl.: F01N 3/20

(54) **WASSERGEKÜHLTES DOSIERMODUL**
WATER-COOLED DOSING MODULE
MODULE DE DOSAGE À REFROIDISSEMENT À L'EAU

(30) Priorität: 27.01.2012 DE 102012201203
(43) Veröffentlichungstag der Anmeldung: 03.12.2014
(73) Patentinhaber: Robert Bosch GmbH, 70442 Stuttgart (DE)
(72) Erfinder: KIONTKE, Martin, 71254 Ditzingen (DE); POHL, Stephan, 71701 Schwieberdingen (DE); KNITTEL, Achim, 71254 Ditzingen (DE); WINKLER, Jochen, 73730 Esslingen (DE)
(86) Internationale Anmeldenummer: PCT/EP2013/050076
(87) Internationale Veröffentlichungsnummer: WO 2013/110484

(56) Entgegenhaltungen:
- WO-A1-2012/049175
- WO-A1-2012/127010
- WO-A1-2013/076112
- DE-A1- 4 436 397
- DE-A1-102009 047 375

## Beschreibung

### Stand der Technik

DE 44 36 397 A1 bezieht sich auf eine Einrichtung zum Nachbehandeln von Abgasen. Es wird eine Einrichtung zum Nachbehandeln von Abgasen einer selbstzündenden Verbrennungskraftmaschine offenbart, bei der zur Verbesserung der Arbeitsweise eines reduzierenden Katalysators ein Reduktionsmittel in das dem Katalysator zugeführte Abgas eingegeben wird. Die Eingabe des Reduktionsmittels erfolgt dabei über ein elektrisch gesteuertes Dosierventil, das in einem gemeinsamen Gehäuse mit einem Steuerventil kombiniert ist. Dieses Steuerventil dient der gesteuerten Einbringung von zugeführter Druckluft, in der eine über das Dosierventil vorgelagerte Menge von Reduktionsmittel aufbereitet und intermittierend in das Abgas eingegeben wird. Dies dient insbesondere zur Vermeidung von Harnstoffablagerungen und Verklebungen an Dosierventil und Steuerventil neben der optimalen Aufbereitung des eingebrachten Reduktionsmittels.

DE 198 56 366 C1 bezieht sich auf eine Vorrichtung und ein Verfahren zum Nachbehandeln von Abgasen einer mit Luftüberschuss arbeitenden Verbrennungskraftmaschine. Es wird eine Vorrichtung zum Nachbehandeln von Abgasen vorgeschlagen, die einen zur Reduktion von NOₓ-Bestandteilen im Abgas dienenden Reduktionskatalysator umfasst. Ferner umfasst die Vorrichtung eine elektrisch ansteuerbare Dosiereinrichtung zum gesteuerten Einbringen von Reduktionsmittel in eine Abgasleitung stromaufwärts des Reduktionskatalysators sowie eine Einrichtung zum Kühlen der Dosiereinrichtung. Die Dosiereinrichtung umfasst ein Einspritzventil, das von einem unmittelbar mit der Abgasleitung verbundenen doppelwandigen Ventilaufnahmekörper umfasst ist. Des Weiteren umfasst die Dosiereinrichtung eine Drucklufterzeugungseinrichtung, die Druckluft in einen Luftspalt zwischen einer Außenwandung und einer Innenwandung des Ventilaufnahmekörpers zum Kühlen zumindest der abgasnahen Teile des Einspritzventiles einbläst.

Der Ventilaufnahmekörper weist an seiner der Abgasleitung abgewandten Seite eine dem Durchmesser des Einspritzventiles angepasste Ausnehmung auf. Diese wird von der Innenwandung begrenzt, so dass im eingebauten Zustand des Einspritzventiles die Austrittsöffnung des Einspritzventiles kurz vor oder in Höhe der mit einer Durchtrittsöffnung für das einzubringende Reduktionsmittel versehenen Wandung der Abgasleitung liegt.

Bei der Entwicklung von Dosiermodulen (Advanced Dosing Modul = aDm) wird ein Einspritzventil zum Zwecke der Harnstoffdosierung aufgenommen. Um mit der Ventilspitze bei diesem Dosierventil so nah wie möglich an den Abgasstrom zu kommen, wird in diesem Dosiermodul die Ventilaufnahme aktiv gekühlt. Dies geschieht über einen Anschluss des Kühlkörpers an den Kühlmittelkreislauf des Fahrzeugs. Dadurch wird sichergestellt, dass auch bei abgasnaher Positionierung des Dosierventiles die Ventilspitzentemperatur nicht über 120°C ansteigt.

Ein Nachteil dieser Ausführung liegt in einer fehlenden Kühlwirkung im oberen Bereich, d.h. im Bereich der elektrischen Kontaktierung des Dosierventiles. Dadurch ist es nicht möglich, dieses Dosiermodul in Umgebungstemperaturen einzusetzen, die größer als 160°C sind. Die elektrische Steckerverbindung und die Spule des Dosierventiles nehmen bei Temperaturen oberhalb von 160°C Schaden, so dass mit einem Ausfall des Ventiles bzw. der elektrischen Kontaktierung des Dosierventiles zu rechnen ist.Auch die DE 10 2009 047 A1 zeigt ein gekühltes Dosiermodul.

### Darstellung der Erfindung

Erfindungsgemäß wird ein Dosiermodul vorgeschlagen, welches dem Einbringen eines Reduktionsmittels in den Abgasstrom einer Verbrennungskraftmaschine dient, welches eine vollständige Einhausung umfasst und mit seitlichen hydraulischen Anschlüssen versehen ist, die eine mögliche Kontaktierung nahezu entlang seines gesamten Umfanges, d.h. 360° ermöglicht. Damit besteht die Möglichkeit, das erfindungsgemäß vorgeschlagene Dosiermodul in den Motorraum eines Fahrzeugs zu verlegen, in dem Temperaturen über 200°C auftreten können, wobei den dort herrschenden beengten Bauraumvorgaben in vollem Umfang Rechnung getragen werden kann. Im Allgemeinen werden Dosierventile im Unterbodenbereich eines Fahrzeugs eingebaut, wo wesentlich mehr Bauraum zur Verfügung steht.

Durch die erfindungsgemäß vorgeschlagene Lösung kann einerseits den beengten Einbauverhältnissen im Motorraum eines Fahrzeugs Rechnung getragen werden und andererseits ist sichergestellt, dass durch die erfindungsgemäß vorgeschlagene Kompletteinhausung des Dosierventiles dieses Temperaturen von 200°C und mehr standhalten kann.

Durch die erfindungsgemäß vorgeschlagene Lösung wird auch durch die komplette Einhausung des Dosiermodules die Kühlung des kompletten Dosiermoduls gewährleistet. In vorteilhafter Weise kann die Kompletteinhausung (Volleinhausung) durch zwei zusätzliche Teile realisiert werden, die insbesondere als Blechteile ausgebildet sind und auf den unteren Kühlkörperabschnitt aufgesetzt werden. Durch diesen zusätzlichen Kühlkörper ist es möglich, auch den oberen Bereich des Ventiles zu kühlen, in dem die elektrische Kontaktierung, beispielsweise dargestellt durch einen seitlichen Steckerabgang, liegt. Beispielsweise kann der obere zusätzliche, auf den unteren Kühlkörper aufgesetzte Kühlkörper durch eine stoffschlüssige Verbindung, so zum Beispiel über eine Laserverschweißung mit dem unteren Kühlkörper verbunden sein.

Bei der erfindungsgemäß vorgeschlagenen Lösung der Ummantelung des Ventiles mit einer Volleinhausung, wird vom Fahrzeug kommendes Kühlmittel zuerst in den unteren Kühlkörper eingeleitet, so dass dort die größte Kühlleistung an der heißesten Stelle, d.h. an der Ventilspitze des Ventiles vorliegt. Dadurch wird eine optimale Kühlung des Ventilspitzenbereiches des erfindungsgemäß vorgeschlagenen Dosiermoduls erreicht. Vom unteren Kühlkörper aus tritt das nunmehr aufgrund der Abkühlung der Ventilspitze durch Wärmeaufnahme erwärmte Kühlfluid im Bereich der Laserverschweißung an der Innenseite in den oberen zusätzlichen Kühlkörper über. Somit kann auch der obere Bereich des Dosiermodules, in dem die elektrische Verbindung sowie die Magnetspule liegt, gekühlt werden. In fertigungstechnisch günstiger Weise ist die Volleinhausung gemäß der erfindungsgemäß vorgeschlagenen Lösung vollständig durch Tiefzieh- und Biegeteile darstellbar, was eine kostengünstige Herstellung der erfindungsgemäß vorgeschlagenen, das Dosiermodul umgebenden Volleinhausung ermöglicht.

Die erfindungsgemäß vorgeschlagene Lösung zeichnet sich zudem dadurch aus, dass die hydraulische Anschlüsse in hoher Variabilität ausgebildet werden können. So kann beispielsweise der hydraulische Anschluss für die Zuleitung des Reduktionsmittels, bei dem es sich beispielsweise um eine Harnstoff-Wasser-Lösung (HWL) oder um Harnstoff (AdBlue) handeln kann, theoretisch entlang des vollen Umfanges, d.h. in 360°, so zum Beispiel in Rasterungen von 45° oder 30° oder weniger positioniert werden.

Der hydraulische Anschluss für den Kühlwasserzulauf im unteren Bereich des Ventilkörpers kann um 180° verdrehbar ausgebildet werden, so zum Beispiel in Abstufungen von 15° oder 20° oder weniger mit Hilfe von gewinkelten Anschlüssen ausgeführt werden.

Aufgrund dieser Variabilität der Lage des Kühlwassereintritts, des Kühlwasseraustritts sowie des Reduktionsmittelzulaufes, kann den beengten Bauraumverhältnissen, die im Motorraum von Fahrzeugen vorliegen, Rechnung getragen werden. Durch die hohe Variabilität der Kühlwasserzu- bzw. Kühlwasserabläufe kann des Weiteren eine hohe Varianz, d.h. eine hohe Variabilität im Hinblick auf unterschiedliche Kundenanforderungen, abhängig vom zum Verfügung stehenden Bauraum sichergestellt werden. Des Weiteren lässt sich durch die erfindungsgemäß vorgeschlagene Lösung in vorteilhafter Weise erreichen, dass nunmehr aufgrund der Volleinhausung eine Kühlung des Dosiermodules auch im Bereich von dessen elektrischer Kontaktierung gewährleistet ist.

### Vorteile der Erfindung

Die Vorteile der erfindungsgemäß vorgeschlagenen Lösung liegen - wie oben stehend bereits ausgeführt- in einer erhöhten Temperaturbeständigkeit des erfindungsgemäß vorgeschlagenen Dosiermodules, was dessen Einbau auch im Motorraum eines Fahrzeugs ermöglicht. Des Weiteren kann durch die hohe Varianz der Positionierung der Kühlwasserzuläufe bzw. des Reduktionsmittelzulaufes unterschiedlichen Einbauverhältnissen im Motorraum von Fahrzeugen Rechnung getragen werden.

Als weiterer Vorteil der erfindungsgemäß vorgeschlagenen Lösung ist zu nennen, dass durch ein radiales Anbringen der Kühlwasseranschlüsse ein kleinerer Querschnitt des Kühlkörpers erreicht werden kann. Dies wiederum führt zu einer verkleinerten Auslegung des Dicht- bzw. Befestigungsbereiches. Dadurch wiederum können eine kleinere Dichtung sowie eine kleinere Schelle verwendet werden, was den Bauraum günstig beeinflusst, so dass Kundenbauraumforderungen besser Rechnung getragen werden kann.

### Kurze Beschreibung der Zeichnungen

Anhand der Zeichnung wird die Erfindung nachstehend eingehender beschrieben.

Es zeigt:
- Figur 1: einen Schnitt durch ein Dosiermodul mit einem eine Volleinhausung bildenden unteren und oberen Kühlkörper im Schnitt,
- Figur 2: eine Darstellung des Dosiermoduls mit unterem Kühlkörper und oberen Kühlköper sowie einer gerichteten Kühlfluidströmung durch die Kühlkörper,
- Figur 3: eine perspektivische Draufsicht auf das erfindungsgemäß vorgeschlagene, mit einer Volleinhausung versehene Dosiermodul,
- Figur 4: eine perspektivische Darstellung des erfindungsgemäß vorgeschlagenen Dosiermodules mit angedeuteten Anschlusspositionen in Bezug auf den Reduktionsmittelzulauf und den Kühlmittelrücklauf,
- Figur 5: den unteren Bereich des erfindungsgemäß vorgeschlagenen Dosiermoduls mit verdrehbar ausgebildetem Flansch, an dessen Mantelfläche ein Kühlfluidzulauf aufgenommen ist und
- Figur 6: eine weitere Ausführungsvariante von Anschlusspositionen für den Reduktionsmittelzulauf.

### Ausführungsvarianten

Ein erfindungsgemäß vorgeschlagenes Dosiermodul 10 dient zum Eindosieren eines Reduktionsmittels in den Abgastrakt einer Verbrennungskraftmaschine. Durch das Reduktionsmittel werden die im Abgas der Verbrennungskraftmaschinen enthaltenen NOₓ-Bestandteile zu H₂O und N₂ reduziert. Als Reduktionsmittel kommen vorwiegend Harnstoff-Wasser-Lösungen (HWL), oder andere Harnstoffgemische zum Einsatz. Ein bekanntes Reduktionsmittel ist unter dem Handelsnamen AdBlue® bekannt und wird in derartigen Dosiersystemen eingesetzt.

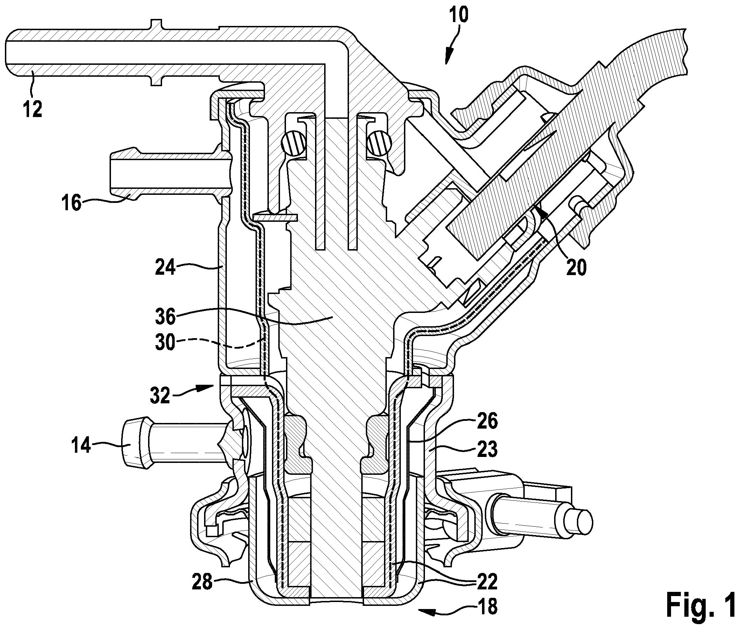

Figur 1 zeigt eine Schnittdarstellung durch ein Dosiermodul 10, das mit einer Volleinhausung versehen ist, die einen unteren Kühlkörper und einen oberen Kühlkörper umfasst.

Die Schnittdarstellung gemäß Figur 1 zeigt ein Dosiermodul 10, in dessen oberen Bereich sich ein seitlich abgehender Reduktionsmittelzulauf erstreckt. Über den Reduktionsmittelzulauf 12 strömt das Reduktionsmittel einem Dosierventil 36 des Dosiermoduls 10 zu. Das Dosierventil 36 des Dosiermoduls 10 wird über eine elektrische Kontaktierung 20 elektrisch kontaktiert. Die Baugruppe Dosierventil 36 umfasst eine Magnetspule, die über die elektrische Kontaktierung 20 bestrombar ist, so dass eine Ventilspitze in einem Ventilspitzenbereich 18 des Dosierventiles 36 öffnet bzw. schließt. Beim Öffnen der Ventilspitze, die im Ventilspitzenbereich 18 des Dosierventiles 36 liegt, wird das Reduktionsmittel, welches in der Regel als feinverstäubter Sprühnebel vorliegt, in den Abgastrakt der Verbrennungskraftmaschine eindosiert.

Wie der Darstellung gemäß Figur 1 des Weiteren entnommen werden kann, umfasst das Dosierventil 10 einen Kühlfluidzulauf 14 und einen Kühlfluidrücklauf 16. Der Kühlfluidzulauf 14 befindet sich an der Mantelfläche eines verdrehbar ausgebildeten Flansches 23. Der Flansch 23 ist verdrehbar auf der Außenseite des unteren Kühlkörpers 22 aufgenommen, der darüber hinaus ein Strömungsleitblech 26 umfasst. An der Außenseite des unteren Kühlkörpers 22 befindet sich eine schellenförmig ausgebildete Abdichtung 31.

In der Schnittdarstellung gemäß Figur 1 sind am unteren Kühlkörper 22 gekühlte Flächen mit Bezugszeichen 28, hier gestrichelt angedeutet, bezeichnet. Analog dazu sind obere gekühlte Flächen 30, die vom Kühlfluid im oberen zusätzlichen Kühlkörper 24 benetzt werden, durch Bezugszeichen 30 gestrichelt angedeutet. Die in Figur 1 gestrichelt angedeuteten gekühlten Flächen 28 bzw. 30 werden vom Kühlfluid, bei dem es sich bevorzugt um Kühlfluid aus dem Kühlkreislauf der Verbrennungskraftmaschine handelt, benetzt und gekühlt. Zwischen dem oberen zusätzlichen Kühlkörper 24 und der Ringfläche am oberen Ende des unteren Kühlkörpers 22 befindet sich eine Abdichtung in Form einer stoffschlüssigen Verbindung 32. Diese stoffschlüssige Verbindung 32 wird bevorzugt im Wege des Laserschweißens ausgebildet.

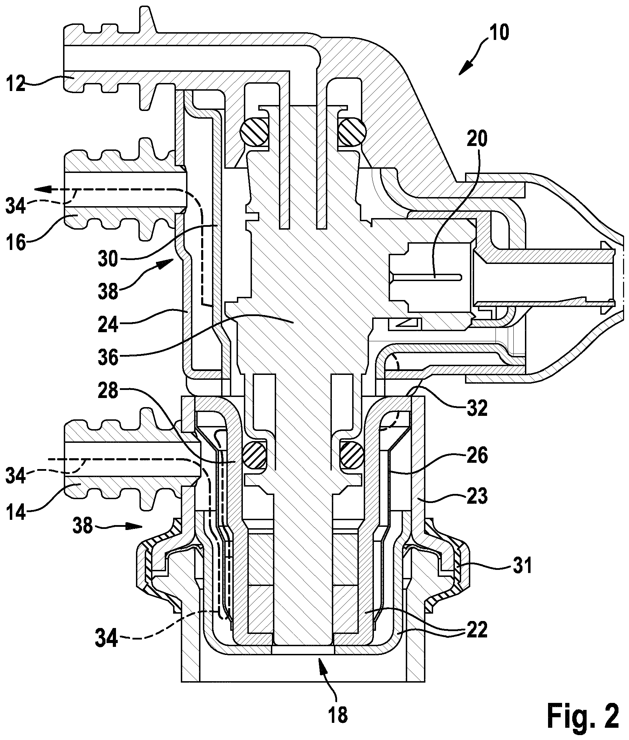

Aus der Darstellung gemäß Figur 2 geht ebenfalls eine Schnittdarstellung durch das erfindungsgemäß vorgeschlagene Dosiermodul hervor, bei welchem der untere Kühlkörper und der obere zusätzliche Kühlkörper von einer gerichteten Kühlfluidströmung durchströmt sind.

Die Darstellung gemäß Figur 2 zeigt das Dosiermodul 10, welches im Wesentlichen analog zum in Figur 1 im Schnitt dargestellten Dosiermodul 10 ausgebildet ist. Wie aus der Darstellung gemäß Figur 2 hervorgeht, strömt das Kühlfluid, bei dem es sich bevorzugt um Kühlfluid aus dem Kühlkreislauf der Verbrennungskraftmaschine handelt, in den Kühlmittelzulauf 14 ein, und wird durch das den unteren Kühlkörper 22 umgebende, zylindrisch ausgebildete Leitblech nach unten in Richtung auf den Ventilspitzenbereich 18 abgelenkt. Dies bedeutet, dass die gerichtete Kühlmittelströmung 34 nach Passage des Kühlfluidzulaufes 14 zunächst in vertikale Richtung nach unten strömt. Dies bedeutet, dass in Bezug auf das herrschende Temperaturniveau, das Kühlfluid mit der niedrigsten Temperatur in den heißesten Bereich, d.h. den Ventilspitzenbereich 18, der dem Abgastrakt der Verbrennungskraftmaschine am nächsten liegt, geleitet wird. Dadurch kann im Ventilspitzenbereich 18 ein Maximum an Kühlung erreicht werden. Nach Passage des Ventilspitzenbereich 18 strömt die gerichtete Kühlmittelströmung 18 in vertikale Richtung, den unteren Kühlkörper 22 verlassend über mindestens eine in der Schnittdarstellung gemäß Figur 2 nicht näher dargestellte Öffnung dem oberen zusätzlichen Kühlkörper 24 zu. Dort werden die in Figur 1 dargestellten oberen gekühlten Flächen 30 vom nunmehr aufgrund der Wärmeaufnahme erwärmten Kühlfluides benetzt. Das Kühlfluid kühlt nun im Bereich des oberen zusätzlichen Kühlkörpers 24 durch Benetzung der oberen gekühlten Flächen 30 die elektrische Kontaktierung 20, so dass deren Maximaltemperatur auf 160°C begrenzt werden kann.

Da nunmehr durch die erfindungsgemäß vorgeschlagene Kühlung mittels einer Volleinhausung 38 am Dosiermodul 10, einen unteren Kühlkörper 22 und den oberen zusätzlichen Kühlkörper 24 umfassend, eine Kühlung der gesamten Komponenten des Dosiermoduls 10 erreicht werden kann, kann dieses auch im Motorraum eines Fahrzeugs eingesetzt werden und aufgrund der Kühlung Umgebungstemperaturen von 200°C und mehr ausgesetzt werden. Aufgrund der Komplettkühlung des Dosiermodules 10 ist ein Ausfall bzw. ein Versagen der elektrischen Kontaktierung 20 im Bereich des oberen zusätzlichen Kühlkörpers 24 nicht zu befürchten.

Wie aus der Darstellung gemäß Figur 2 des Weiteren hervorgeht, verlässt die gerichtete Kühlmittelströmung 34 den oberen zusätzlichen Kühlkörper 24 an mindestens einen Kühlmittelrücklauf 16 und wird wieder in den Kühlkreislauf der Verbrennungskraftmaschine eingespeist.

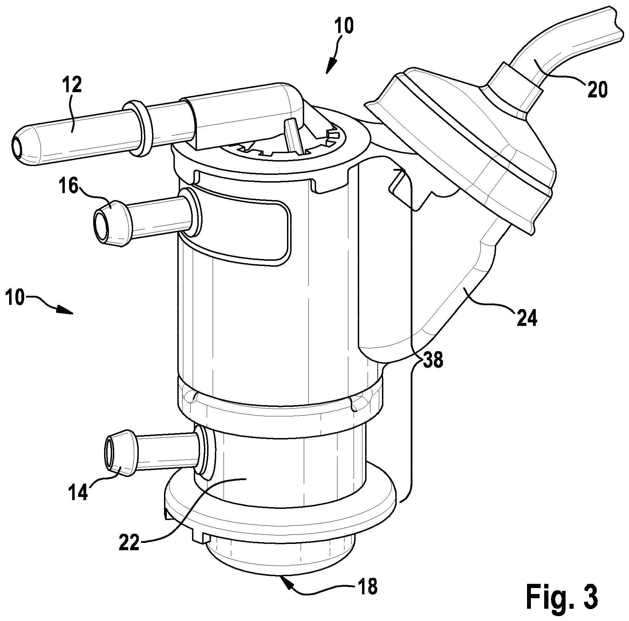

Figur 3 zeigt eine perspektivische Draufsicht auf das erfindungsgemäß vorgeschlagene Dosiermodul.

Aus der Darstellung gemäß Figur 3 lässt sich entnehmen, dass in dieser Ausführungsvariante der Reduktionsmittelzulauf 12, der mindestens eine Kühlwasserrücklauf 16 sowie der mindestens eine Kühlfluidzulauf 14 in einer vertikalen Ebene übereinanderliegend angeordnet sind. Dies bedeutet, dass die dementsprechenden Kühlfluidleitungen bzw. die Reduktionsmittelzuleitung an ein und derselben Seite bezogen auf die Umfangsfläche des Dosiermodules liegen. Den erwähnten Fluidanschlüssen 12, 14, 16 gegenüberliegend, befindet sich am oberen zusätzlichen Kühlkörper 24 seitliche die bereits erwähnte elektrische Kontaktierung 20. Die Volleinhausung 38 wird durch den oberen zusätzlichen Kühlkörper 24 und den den mindestens einen Kühlfluidzulauf 14 aufweisenden verdrehbaren Flansch 23, der den unteren Kühlkörper 22 umschließt, gebildet. Durch Bezugszeichen 18 ist der vom unteren Kühlkörper 22 umschlossene Ventilspitzenbereich 18 angedeutet, welcher die thermisch höchst belastete Stelle des Dosiermoduls 10 darstellt.

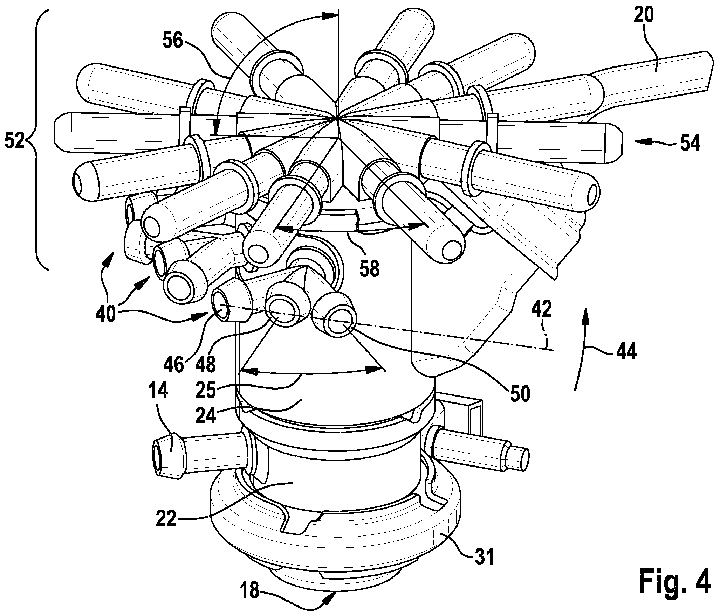

Figur 4 sind verschiedene mögliche Positionen der hydraulischen Anschlüsse, insbesondere des Reduktionsmittelzulaufs sowie des Kühlfluidrücklaufes zu entnehmen.

Die perspektivische Darstellung gemäß Figur 4 zeigt, dass an der Mantelfläche des oberen zusätzlichen Kühlkörpers 24 der Kühlfluidrücklauf 16 verschiedene Anschlusspositionen 40 aufweisen kann. Während in den Schnittdarstellungen gemäß der Figuren 1 und 2 an der Mantelfläche des oberen zusätzlichen Kühlkörpers 24 lediglich ein Kühlfluidrücklauf 16 ausgebildet ist, vergleiche auch perspektivische Ansicht gemäß Figur 3, lässt sich Figur 4 entnehmen, dass der Kühlmittelrücklauf 16 auch einzelne Abgänge 46, 48, 50 aufweisen kann. In der Darstellung gemäß Figur 4 sind die einzelnen Abgänge 46, 48, 50 des Kühlfluidrücklaufes 16 in einer horizontalen Ebene 42 angedeutet. Es besteht jedoch zur Ermöglichung und Darstellung einer hohen Flexibilität in Bezug auf die Lage der hydraulischen Anschlussleitungen, hier insbesondere der Kühlfluidrücklaufleitungen, die Möglichkeit, die Anschlusspositionen 46, 48, 50 beispielsweise um 45°, oder wie in Figur 4 dargestellt, um 90° zu verdrehen, vergleiche Position 44, wenn dies aus Einbaugründen aufgrund der beengten Bauraumverhältnisse beispielsweise im Motorraum des Fahrzeugs erforderlich sein sollte. In Bezug auf die Verdrehbarkeit der ersten, zweiten und dritten Anschlusspositionen 46, 48, 50, bestehen verschiedene Einbaumöglichkeiten zur Darstellung kurzer Leitungswege sowie zur optimalen Ausnutzung des eng bemessenen, zur Verfügung stehenden Bauraums im Motorraum des Fahrzeugs. Bezugszeichen 25 bezeichnet einen Spreizwinkel, in welchem die einzelnen Anschlusspositionen 46, 48, 50 zueinander orientiert sein können.

Darüber hinaus ist in Figur 4 an der Oberseite eine Darstellung von Einbaupositionen des Reduktionsmittelzulaufs 12 dargestellt. Aus der in Figur 4 gewählten perspektivischen Darstellung geht hervor, dass der Reduktionsmittelzulauf 12 in beliebigen durch Bezugszeichen 52 bezeichneten Montagepositionen angeordnet werden kann. Die Anordnung des Reduktionsmittels 12 in Bezug auf seine Umfangslage am Dosiermodul 10 richtet sich nach den Einbauverhältnissen im Motorraum des Fahrzeugs bzw. nach vorgegebenen Leitungslängen bzw. Leitungspositionen im Motorraum des Fahrzeugs. Figur 4 zeigt, dass die Positionen 52 für den Reduktionsmittelzulauf 12 in der perspektivischen Darsicht 4 sich im Wesentlichen innerhalb einer horizontalen Ebene 54 erstrecken. Abweichend hierzu besteht selbstverständlich die Möglichkeit, die horizontale Ebene 54 auch je nach Bauraumerfordernissen zu neigen oder gar eine 90°-Verdrehung 56 vorzunehmen, so dass der Reduktionsmittelzulauf 12 - hier zeichnerisch nicht dargestellt - auch senkrecht von oben am Dosiermodul 10 koaxial zu dessen Achse angeordnet werden könnte. Anstelle der in Figur 4 angedeuteten 90°-Verdrehung 56 in Bezug auf die horizontale Ebene 54 könnten auch andere Winkel, die sich nach den Bauraumverhältnissen richten, gewählt werden.

Aus Figur 4 geht des Weiteren hervor, dass einzelne Anschlusspositionen 46, 48, 50 in einer Rasterung 60 von 30° bzw. 45° oder anderen beliebigen Winkeln vorliegen können. Gleiches gilt für die Varianz von Reduktionsmittelzuläufen, die in einer Teilung von 30° bzw. 45°, angedeutet durch Bezugszeichen 58 in der perspektivischen Darstellung gemäß Figur 4, angeordnet werden können. Wie Figur 4 des Weiteren zeigt, können - im Vergleich zu Figur 3 - die Kühlfluidrückläufe 16 als Stahl- oder Edelstahlrohre gedreht, gezogen oder gestaucht, gefertigt sein, die, wie in Figur 4 dargestellt, verschiedene Anschlusspositionen 46, 48, 50 aufweisen können, die gemäß dieser Ausführungsvariante in der horizontalen Ebene 42 liegen. Es besteht des Weiteren die Möglichkeit, die Anschlusspositionen 46, 48, 50 derart zu verdrehen, dass diese, abweichend von der Ebene 42 in einer sich vertikal von oben nach unten erstreckenden oder in einer geneigten Ebene angeordnet werden können.

Figur 4 zeigt, dass Anschlusspositionen 40 für den Kühlfluidrücklauf 16 der erfindungsgemäß vorgeschlagenen Lösung folgend, eine hohe Varianz aufweisen können, so dass den unterschiedlichsten kundenseitigen Anforderungen hinsichtlich des zur Verfügung stehenden Einbauraumes sowie hinsichtlich unterschiedlicher Leitungsführungen aufgrund der hohen Varianz der Anschlusspositionen in hohem Maße Rechnung getragen werden kann. Im vorstehenden Zusammenhang sei noch darauf hingewiesen, dass in der Regel nur ein Kühlfluidzulauf 14 bzw. ein Kühlfluidrücklauf 16 im Rahmen einer Kühlfluidzirkulation eingesetzt werden.

Normalerweise wird nur ein Kühlfluidzulauf 14 sowie ein Kühlfluidrücklauf 16 verwirklicht. In Figur 4 sind insbesondere eine Vielzahl möglicher Positionen 52 des Reduktionsmittelzulaufes 12 dargestellt, um den Einbauerfordernissen kundenseits Rechnung zu tragen.

Aus der Darstellung gemäß Figur 4 geht hervor, dass sich unterhalb des verdrehbaren Flansches 23, an dessen Mantelfläche sich der Kühlfluidzulauf 14 befindet, die schellenförmig ausgebildete Abdichtung 31 aufgenommen ist. Unterhalb dieser wiederum erstreckt sich der untere Kühlkörper 22, der den Ventilspitzenbereich 18 aufnimmt.

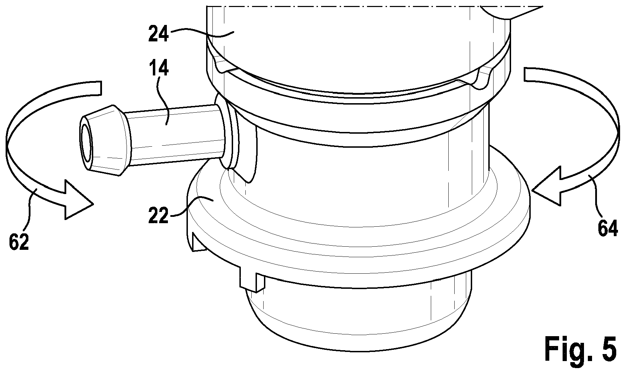

Der Darstellung gemäß Figur 5 ist der untere Bereich des erfindungsgemäß vorgeschlagenen Dosiermoduls 10 zu entnehmen.

Aus der perspektivischen Darstellung gemäß Figur 5 geht hervor, dass sich unterhalb des oberen zusätzlichen Kühlkörpers 24 der verdrehbare Flansch 23 befindet. Aus der Schnittdarstellung gemäß den Figuren 1 und 2 geht hervor, dass der verdrehbare Flansch 23, an dessen Mantelfläche der mindestens eine Kühlfluidzulauf 14 ausgebildet ist, verdrehbar am unteren Kühlkörper 22 aufgenommen ist.

Aus der Darstellung gemäß Figur 5 lässt sich entnehmen, dass der verdrehbare Flansch 23 eine Verdrehbewegung, vergleiche Bezugszeichen 62, ausführen kann. Der Winkelbereich, um den der verdrehbare Flansch 23, der drehbar am unteren Kühlkörper 22 aufgenommen ist, verdreht werden kann, ist durch Bezugszeichen 64 bezeichnet und beträgt mindestens 180°. Der Winkelbereich 64, um den der verdrehbare Flansch 23 in Rotationsrichtung bewegbar ist, kann stufenlos durchfahren werden und an unterschiedlichste Kundenanforderungen angepasst werden. Fertigungstechnisch sinnvoll sind Verdrehungsteilschritte in der Größenordnung von > 5°.

Unterhalb des verdrehbaren Flansches 23, an dem der mindestens eine Kühlfluidzulauf aufgenommen ist, befindet sich das untere Ende des unteren Kühlkörpers 22, der den Ventilspitzenbereich 18, den thermisch höchst belasteten Bereich des Dosiermoduls 10 darstellt, umschließt.

Das vorstehend in Zusammenhang mit den Figuren 1 bis 5 beschriebene, erfindungsgemäße Dosiermodul 10, kann nahezu vollständig durch Tiefziehbauteile bzw. Biegeteile hergestellt werden, was eine besonders kostengünstige Herstellung des erfindungsgemäß vorgeschlagenen Dosiermodules 10 in der Großserienfertigung ermöglicht. Aufgrund der Verdrehbarkeit des verdrehbaren Flansches 23, vergleiche Figur 5 sowie der hohen Variabilität der Positionierung der Kühlmittelrückläufe 16, vergleiche Steckerabgänge 40 sowie Abgänge 46, 48, 50 sowie der Variabilität hinsichtlich der Umfangspositionierung des mindestens einen Reduktionsmittelzulaufes 10, ist eine hohe Variabilität der hydraulischen Anschlüsse gegeben. Der hydraulische Anschluss für das Reduktionsmittel, d.h. der Reduktionsmittelzulauf 12 kann theoretisch um 360° in Rasterungen von zum Beispiel 30° oder weniger positioniert werden. Der hydraulische Anschluss für den Kühlwasserzulauf 14 kann stufenlos um 360° positioniert werden, während die Positionierung der hydraulischen Anschlüsse für den Kühlwasserrücklauf 16 um 180° in Abstufungen von zum Beispiel 20° oder 30° mit Hilfe gewinkelter ausgebildeter Abgänge 40 positioniert werden kann.

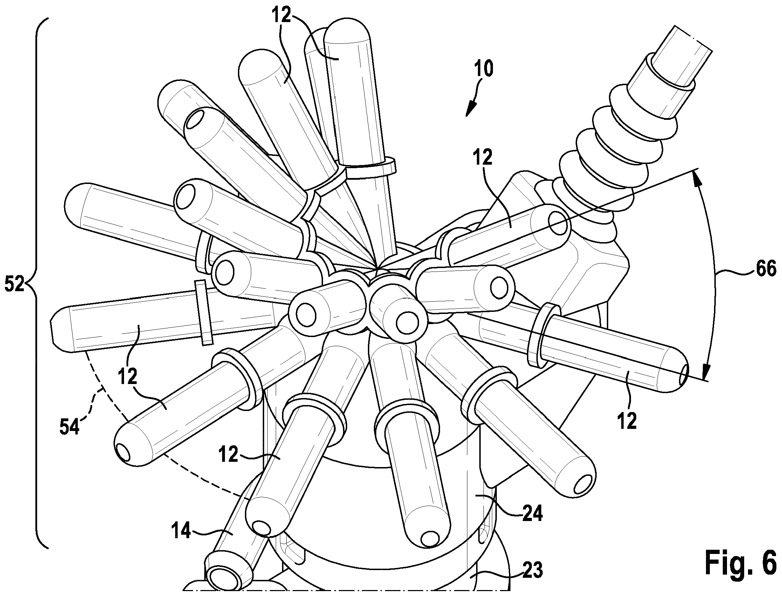

Aus der Darstellung gemäß Figur 6 geht eine weitere Ausführungsvariante hinsichtlich möglicher Positionen eines Reduktionsmittelzulaufs hervor.

Aus Figur 6 lässt sich entnehmen, dass die Reduktionsmittelzuläufe in 30°- oder 45°-Rasterungen in einer sich im Wesentlichen horizontal erstreckenden Ebene 54 positioniert werden können. In der Darstellung gemäß Figur 6 sind in Bezug auf die horizontale Ebene 54 eine Vielzahl von möglichen Positionen, die der Reduktionsmittelzulauf 12 einnehmen kann, angedeutet. In der Praxis wird je nach Einbauverhältnissen des erfindungsgemäß vorgeschlagenen Dosiermodules 10 die geeignete Position gewählt und der in der Regel als Kunststoffspritzgussbauteil gefertigte Reduktionsmittelzulauf 12 in der entsprechenden Position eingebaut. Darüber hinaus besteht der erfindungsgemäß vorgeschlagenen Lösung folgend auch die Möglichkeit, den mindestens einen Reduktionsmittelzulauf 12 in einem Anstellwinkel, vergleiche Position 66 in Figur 6 dargestellt, zum Beispiel 30° oder 45° zu positionieren, und schließlich, was zeichnerisch nicht dargestellt ist, den mindestens einen Reduktionsmittelzulauf in senkrechte Einbauposition, d.h. im Wesentlichen in der Achse des Dosiermodules 10, anzuordnen. Auch in Bezug auf den Anstellwinkel 66, in der der mindestens eine Reduktionsmittelzulauf 12 positioniert werden kann, sind in der Darstellung gemäß Figur 6 eine Vielzahl von möglichen Positionen angedeutet, wohingegen in der Praxis lediglich eine Position unter Berücksichtigung der zur Verfügung stehenden Einbauverhältnisse gewählt wird.

Unterhalb der durch die verschiedenen Positionen 52 aufgespannten Ebene 54 in Bezug auf den mindestens einen Reduktionsmittelzulauf 12, erstreckt sich am Dosiermodul 10 gemäß der perspektivischen Draufsicht nach Figur 6 der obere zusätzliche Kühlkörper 24, unterhalb dessen sich der verdrehbare Flansch 23 befindet, der den mindestens einen Kühlfluidzulauf 14 umfasst.

## Patentansprüche

1. Dosiermodul (10) zum Eindosieren eines Reduktionsmittels in einen Abgastrakt einer Verbrennungskraftmaschine, wobei das Dosiermodul (10) mindestens einen Kühlkörper (22, 24) umfasst, der von einem Kühlfluid, das zur Kühlung der Verbrennungskraftmaschine dient, durchströmt ist und welches eine elektrische Kontaktierung (20) umfasst, **dadurch gekennzeichnet, dass** das Dosiermodul (10) eine Volleinhausung (38) aufweist, welche das Dosiermodul (10) umschließt, wobei die Volleinhausung einen unteren und einen oberen Kühlkörper (22, 24) umfasst, die von einer gerichteten Kühlfluidströmung (34), ausgehend von einem Ventilspitzenbereich (18) im Bereich des unteren Kühlkörpers (22) in Richtung einer elektrischen Kontaktierung (20) im Bereich des oberen Kühlkörpers (24) durchströmt sind, wobei am unteren Kühlkörper (22) ein verdrehbarer Flansch (23) aufgenommen ist, an dessen Mantelfläche sich mindestens ein Kühlfluidzulauf (14) befindet und eine stoffschlüssige Verbindung (32) des unteren Kühlkörpers (22) und des oberen zusätzlichen Kühlkörpers (24) als Laserverschweißung ausgeführt ist.

2. Dosiermodul (10) nach Anspruch 1, **dadurch gekennzeichnet, dass** der verdrehbare Flansch (23) am unteren Kühlkörper (22) verdrehbar aufgenommen ist und stufenlos in einem Bereich (64) von 360° verdrehbar ist.

3. Dosiermodul (10) nach Anspruch 1 oder 2, **dadurch gekennzeichnet, dass** sich im Hohlraum zwischen gekühlten Flächen (28) des unteren Kühlkörpers (22) und dem verdrehbaren Flansch (23) ein Strömungsleitblech (26) befindet.

4. Dosiermodul gemäß einem der vorhergehenden Ansprüche, **dadurch gekennzeichnet, dass** an der Mantelfläche des oberen zusätzlichen Kühlkörpers (24) mindestens eine An- schlussposition (46, 48, 50) für einen Kühlfluidrücklauf (16) vorgesehen ist.

5. Dosiermodul (10) gemäß dem vorhergehenden Anspruch 4, **dadurch gekennzeichnet, dass** die Anschlusspositionen (46, 48, 50) in einer horizontalen Ebene (42) liegen.

6. Dosiermodul (10) gemäß einem der vorhergehenden Ansprüche 4 oder 5, **dadurch gekennzeichnet, dass** Anschlusspositionen (40) des mindestens einen Kühlfluidrücklaufes (16) in horizontaler Lage (42) oder in einer vertikalen Lage (44) orientiert sind.

7. Dosiermodul (10) gemäß Anspruch 4 oder 5, **dadurch gekennzeichnet, dass** die Anschlusspositionen (46, 48, 50) in einer Rasterung (60) ausgebildet sind.

8. Dosiermodul (10) gemäß einem der vorhergehenden Ansprüche, **dadurch gekennzeichnet, dass** der mindestens eine Reduktionsmittelzulauf (12) in einer horizontalen Ebene (54) entlang des Umfangs in 360°-Teilung angeordnet sind.

9. Dosiermodul (10) gemäß einem der vorhergehenden Ansprüche, **dadurch gekennzeichnet, dass** Anschlusspositionen (40) zur hydraulischen Kontaktierung des Kühlfluidrücklaufes (16) um 180° an der Mantelfläche des oberen zusätzlichen Kühlkörpers (24) versetzt orientiert sind.

10. Dosiermodul (10) gemäß einem der vorhergehenden Ansprüche, **dadurch gekennzeichnet, dass** der mindestens eine Reduktionsmittelzulauf (12) koaxial zur Achse des Dosiermoduls (10) orientiert ist.

11. Dosiermodul (10) gemäß einem der vorhergehenden Ansprüche 1-9, **dadurch gekennzeichnet, dass** der mindestens eine Reduktionsmittelzulauf (12) in Bezug auf eine horizontale Ebene (54) in 90°-Anordnung (56) oder in einem beliebigen Winkel zur horizontalen Ebene (54) geneigt orientiert ist.

## Claims

1. Dosing module (10) for metering a reducing agent into an exhaust system of an internal combustion engine, wherein the dosing module (10) comprises at least one cooling member (22, 24), through which a cooling fluid that is used to cool the internal combustion engine flows and which comprises an electrical contact means (20), **characterized in that** the dosing module (10) has a full housing (38) which encloses the dosing module (10), wherein the full housing comprises an upper and a lower cooling member (22, 24), through which a directional cooling fluid flow (34) flows in the direction of an electrical contact means (20) in the region of the upper cooling member (24), starting from a valve tip region (18) in the region of the lower cooling member (22), wherein a rotatable flange (23), on the circumferential surface of which there is at least one cooling fluid feed (14), is mounted on the lower cooling member (22) and a material joint (32) of the lower cooling member (22) and of the upper additional cooling member (24) is designed as a laser weld.

2. Dosing module (10) according to Claim 1, **characterized in that** the rotatable flange (23) is mounted rotatably on the lower cooling member (22) and can be rotated in an infinitely variable manner in a range (64) of 360°.

3. Dosing module (10) according to Claim 1 or 2, **characterized in that** a baffle plate (26) is situated in the cavity between the cooled surfaces (28) of the lower cooling member (22) and the rotatable flange (23).

4. Dosing module (10) according to one of the preceding claims, **characterized in that** at least one connection location (46, 48, 50) for a cooling fluid return (16) is provided on the circumferential surface of the upper, additional cooling member (24).

5. Dosing module (10) according to the preceding Claim 4, **characterized in that** the connection locations (46, 48, 50) lie in a horizontal plane (42) .

6. Dosing module (10) according to one of the preceding Claims 4 and 5, **characterized in that** connection locations (40) of the at least one cooling fluid return (16) are oriented in a horizontal position (42) or in a vertical position (44).

7. Dosing module (10) according to Claim 4 or 5, **characterized in that** the connection locations (46, 48, 50) are arranged at a regular interval (60).

8. Dosing module (10) according to one of the preceding claims, **characterized in that** the at least one reducing agent feed (12) is arranged with a 360° pitch along the circumference, in a horizontal plane (54).

9. Dosing module (10) according to one of the preceding claims, **characterized in that** connection locations (40) for the hydraulic contacting of the cooling fluid return (16) are oriented offset by 180° on the circumferential surface of the upper, additional cooling member (24).

10. Dosing module (10) according to one of the preceding claims, **characterized in that** the at least one reducing agent feed (12) is oriented coaxially with the axis of the dosing module (10).

11. Dosing module (10) according to one of the preceding Claims 1-9, **characterized in that**, in relation to a horizontal plane (54), the at least one reducing agent feed (12) is oriented in a 90 ° arrangement (56) or at any desired angle to the horizontal plane (54).

## Revendications

1. Module de dosage (10) qui injecte un agent de réduction dans le conduit de gaz d'échappement d'un moteur à combustion interne,
le module de dosage (10) comportant au moins un corps de refroidissement (22, 24) qui est balayé par un fluide de refroidissement qui sert à refroidir le moteur à combustion interne et qui comporte un contact électrique (20),
**caractérisé en ce que**
le module de dosage (10) est englobé dans un logement (38) qui entoure complètement le module de dosage (10),
le logement complet comportant un corps inférieur et un corps supérieur de refroidissement (22, 24) traversés par un écoulement orienté (34) de fluide de refroidissement partant d'une partie (18) de pointeau de soupape située au niveau du corps inférieur de refroidissement (22) et s'étendant en direction d'un contact électrique (20) situé au niveau du corps supérieur de refroidissement (24),
une bride rotative (23) étant reprise sur le corps, inférieur de refroidissement (22) et au moins une amenée (14) de fluide de refroidissement est située sur sa surface d'enveloppe,
et une liaison (32) en correspondance de matière du corps inférieur de refroidissement (22) et du corps supérieur supplémentaire de refroidissement (24) étant - réalisée sous la forme d'une soudure réalisée par laser.

2. Module de dosage (10) selon la revendication 1, **caractérisé en ce que** la bride rotative (23) est reprise à rotation sur le corps inférieur de refroidissement (22) et peut être tournée en continu sur une plage (64) de 360°.

3. Module de dosage (10) selon la revendication 1 ou 2, **caractérisé en ce qu'**une tôle (26) de guidage d'écoulement est placée dans la cavité située entre la surface refroidie (28) du corps inférieur de refroidissement (22) et la bride rotative (23).

4. Module de dosage selon l'une des revendications précédentes, **caractérisé en ce qu'**au moins une position de raccordement (46, 48, 50) d'un retour (16) de fluide de refroidissement est prévue sur la surface d'enveloppe du corps supérieur supplémentaire de refroidissement (24).

5. Module de dosage (10) selon la revendication 4 qui précède, **caractérisé en ce que** les positions de raccordement (46, 48, 50) sont situées dans un plan horizontal (42).

6. Module de dosage (10) selon l'une des revendications 4 ou 5 qui précèdent, **caractérisé en ce que** les positions de raccordement (40) du ou des retours (16) de fluide de refroidissement sont orientées dans une position horizontale (42) ou dans une position verticale (44).

7. Module de dosage (10) selon la revendication 4 ou 5, **caractérisé en ce que** les positions de raccordement (46, 48, 50) sont formées dans un encliquetage (60).

8. Module de dosage (10) selon l'une des revendications précédentes, **caractérisé en ce que** la ou les amenées (12) d'agent de réduction sont disposées dans un plan horizontal (54) situé à la périphérie à un point de 360°.

9. Module de dosage (10) selon l'une des revendications précédentes, **caractérisé en ce que** les positions de raccordement (40) servant à la mise en contact hydraulique du retour (16) de fluide de refroidissement sont décalées de 180° sur la surface d'enveloppe du corps supérieur supplémentaire de refroidissement (24).

10. Module de dosage (10) selon l'une des revendications précédentes, **caractérisé en ce que** la ou les amenées (12) d'agent de réduction sont orientées coaxialement par rapport à l'axe du module de dosage (10).

11. Module de dosage (10)- selon l'une des revendications 1 à 9 qui précèdent, **caractérisé en ce que** la ou les amenées (12) d'agent de réduction sont orientées dans un plan horizontal (54) à 90° (56) ou selon un angle quelconque par rapport au plan horizontal (54).
